# EUROPÄISCHE PATENTSCHRIFT

(11) **EP 2 405 146 B1**
(45) Veröffentlichungstag und Bekanntmachung des Hinweises auf die Patenterteilung: **10.12.2014**
(21) Anmeldenummer: 10007071.3
(22) Anmeldetag: 09.07.2010
(51) Int. Cl.: F16B 5/02, F16B 35/04

(54) **Montagevorrichtung zur Befestigung einer Baugruppe an einem Bauteil, insbesondere einem Außengehäuse einer weiteren Baugruppe**
Assembly device for attachment of an assembly to a component, in particular an external housing of another assembly
Dispositif de montage pour la fixation d'un bloc sur un composant, notamment sur un boîtier extérieur d'un composant supplémentaire

(43) Veröffentlichungstag der Anmeldung: 11.01.2012
(73) Patentinhaber: VEGA Grieshaber KG, 77709 Wolfach (DE)
(72) Erfinder: Becherer, Frank, 77743 Neuried-Ichenheim (DE); Rauer, Winfried, 77716 Fischerbach (DE)
(74) Vertreter: Göhring, Robert

(56) Entgegenhaltungen:
- WO-A1-02/48557
- WO-A2-99/53206
- DE-A1-102006 020 630
- DE-B3-102006 059 232
- DE-C1- 4 242 439
- DE-U1-202004 004 893
- FR-A1- 2 687 019
- JP-U- H01 156 308
- US-A1- 2005 047 889
- US-A1- 2005 163 588
- US-A1- 2008 056 844
- US-A1- 2008 075 403
- US-A1- 2010 165 580
- US-B1- 6 379 076

## Beschreibung

Die Erfindung betrifft eine Baugruppe, entstanden aus der Befestigung einer Baugruppe an einem Bauteil, insbesondere einem Außengehäuse einer weiteren Baugruppe gemäß Oberbegriff des Patentanspruchs 1.

Es ist bekannt, dass bspw. Elektronikeinheiten als Baugruppen mittels Befestigungsschrauben an einem Bauteil, bspw. an einem Außengehäuse einer weiteren Baugruppe montiert werden (siehe z.B. US 6 379 076 B).

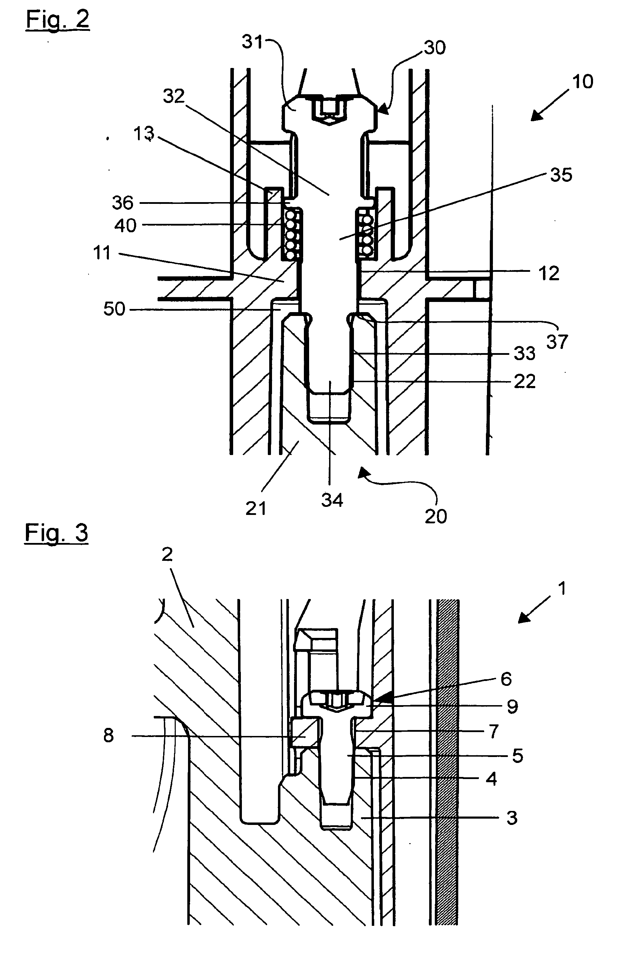

Figur 3 zeigt eine solche Situation, wonach eine Baugruppe 1 als Auswerteelektronik eines Füllstandsmessgerätes mittels einer Schraubverbindung an einem Außen- bzw. Umgehäuse 2 des Füllstandsmessgerätes als weitere Baugruppe befestigt werden soll. Zur Montage wird die Baugruppe 1 vor ihrer Befestigung auf ein Abstützelement (in Figur 2 nicht dargestellt) des Außengehäuses 2 aufgesetzt, so dass sich die Baugruppe 1 daran abstützt.

Gemäß dieser Figur 3 weist das Außengehäuse 2 einen Befestigungsdom 3 als Gewindeträger mit einem Sackgewinde 4 zur Aufnahme eines auf einem Schaft 5 einer Befestigungsschraube 6 angeordneten Gewindes auf. Hierzu wird die Befestigungsschraube 6 durch eine auf einem Schraubenträger 8 angeordneten Durchgangsöffnung 7 geführt und in das Gewinde des Befestigungsdoms 3 eingeschraubt. Aufgrund von Maßtoleranzen der an der Befestigung beteiligten Teile, insbesondere des Abstützelementes hinsichtlich dessen Abmessungen und dessen Lage, liegt der Schraubenträger 8 nicht direkt auf der Stirnfläche des Befestigungsdoms 3 auf, sondern erst durch das "auf Block"-Anziehen mittels der Befestigungsschraube 6 wird der Schraubenträger 8 durch den auf dem Schraubenträger 8 aufliegenden Schraubenkopf 6 flächig auf den Befestigungsdom 3 gezogen, also spaltfrei auf die Stirnfläche des Befestigungsdomes 3 gepresst, wodurch sich in den beteiligten Teilen mechanische Spannungen aufbauen.

Der Nachteil einer solchen Befestigungsvorrichtung besteht darin, dass die aufgrund eines fehlenden Toleranzausgleichs aufgebauten mechanischen Spannungen zu einer überhöhten Belastung bis zum Versagen des Schraubenträgers 8 durch Rissbildung oder Bruch bei ungünstiger Aufsummierung der Maßtoleranzen der beteiligten Teile führen können. Außerdem kann eine solche statische Dauerbelastung bei Verwendung von Kunststoff für die beteiligten Teile ein Setzverhalten durch die Zunahme einer Materialverformung im Laufe der Zeit hervorrufen, wodurch die Vorspannung reduziert, schlimmstenfalls jedoch vollständig verschwindet.

Aufgabe der Erfindung ist es, eine Baugruppe der eingangs genannten Art anzugeben, bei der die Toleranzen der beteiligten Teile kompensiert werden sollen, insbesondere soll die Baugruppe an dem Außengehäuse mit möglichst konstanter Kraft über den vorgesehenen Temperatureinsatzbereich gehaltert werden.

Diese Aufgabe wird gelöst durch eine Baugruppe mit den Merkmalen des Patentanspruchs 1.

Die erfindungsgemäße Lösung umfasst die Merkmale , dass
- der Schraubenschaft der Befestigungsschraube einen vorderen Schaftabschnitt mit einem Gewinde aufweist, wobei dieser vordere Schaftabschnitt in der Befestigungsposition von dem Innengewinde des Gewindeträgers aufgenommen wird, und
- der Schraubenschaft der Befestigungsschraube einen an den vorderen Schaftabschnitt sich schraubenkopfseitig anschließenden weiteren Schaftabschnitt zur Aufnahme eines Federelementes aufweist, wobei dieses Federelement beim Eindrehen der Befestigungsschraube in das Innengewinde gegen den Schraubenträger und einem schraubenkopfseitigen Anschlag vorgespannt wird, so dass dabei die Baugruppe gegen das Abstützelement gedrückt wird und in der Befestigungsposition des vollständig in den Gewindeträger eingeschraubten vorderen Schaftabschnitts ein Spalt zwischen dem Gewindeträger und dem Schraubenträger verbleibt. Die Befestigungsschraube kann dabei als selbstschneidende oder gewindefurchende Schraube ausgebildet sein, so dass sich das erwähnte Innengewinde beim ersten Eindrehen der Befestigungsschraube von selbst ergibt.

Mit dieser erfindungsgemäßen Verschraubung wird in einem gewissen Bereich eine "schwimmende Lagerung" aufgrund des Federelements erreicht, wodurch ein Toleranzausgleich über den Spalt erzielt wird, da dieser nicht wie im Stand der Technik durch Anziehen der Befestigungsschraube auf Block durch das Aufeinanderpressen des Schraubengträgers auf den Gewindeträger beseitigt wird. Mit diesem Federelement werden praktisch alle auftretenden Toleranzen ausgeglichen und gleichzeitig aufgrund der von der vorgespannten Federelement erzeugten Federkraft über den Schraubenträger die Baugruppe mit definierter und vorbestimmter Stärke gegen das Abstützelement gedrückt. Da das Gewinde sich nur auf dem vorderen Schaftabschnitt befindet, kann die Befestigungsschraube immer mit dem gleichen definierten Drehmoment angezogen werden. Dabei werden aufgrund des Federelements die beteiligten Teile, insbesondere der Schraubenträger nicht überlastet, vielmehr erhält dieser Schraubenträger die von dem Federelement ermöglichte Anpresskraft. Damit wird auch über einen größeren Temperaturbereich eine konstante Anpresskraft sichergestellt.

Schließlich wird mit dem Federelement auch ein Sicherungseffekt gegen ein Lösen der Befestigungsschraube erzielt.

Gemäß der Erfindung ist als schraubenkopfseitiger Anschlag für das Federelement zwischen dem vorderen Schaftabschnitt und dem Schraubenkopf ein umlaufender Kragen auf dem weiteren Schaftabschnitt als schraubenkopfseitiger Anschlag vorgesehen. Somit es möglich, zwecks besserer Zugänglichkeit zur Montagestelle den zwischen dem umlaufenden Kragen und dem Schraubenkopf liegenden Schaftbereich entsprechend länger zu wählen.

Um eine reproduzierbare Einschraubtiefe des vorderen, das Gewinde aufweisenden Schaftabschnitts in das Innengewinde des Gewindeträgers zu gewährleisten, ist es gemäß einer Weiterbildung der Erfindung vorteilhaft, den Durchmesser des weiteren Schaftabschnittes größer als den Außendurchmesser des vorderen Schaftabschnittes zu wählen, so dass die dadurch am Übergang des vorderen zum weiteren Schaftabschnitt entstehende Schulter, die den Schaft der Befestigungsschraube umläuft, auf dem Gewindeträger aufliegt. Vorzugsweise ist der Gewindeträger als Besfestigungsdom mit einem Sackgewinde als Innengewinde ausgebildet.

Gemäß der Erfindung ist der Schraubenträger als Befestigungsflansch mit einer Durchgangsöffnung zur Aufnahme des Schaftes der Befestigungsschraube ausgebildet.

Zur besseren Führung des vorzugsweise als Druck- oder Tellerfeder ausgeführten Federelementes ist nach der Erfindung schraubenkopfseitig an der Durchgangsöffnung des Befestigungsflansches eine Buchse an den Befestigungsflansch angeformt, in der das Federelement geführt wird. Dabei ist der Durchmesser des auf dem Schaft der Befestigungsschraube umlaufende Kragens, an dem sich das Federelement abstützt, an den Innendurchmesser dieser Buchse angepasst, um ein leichtes Einführen der mit dem Federelement bestückten Befestigungsschraube und damit eine einfache Montage zu ermöglichen.

Schließlich ist es gemäß einer Weiterbildung der Erfindung besonders vorteilhaft, durch Einstellung der Länge des Schaftes zwischen dem schraubenkopfseitigen Ende des vorderen Schaftabschnittes und dem Anschlag für das Federelement den vorgesehenen Spalt derart einzustellen, dass die in axialer Richtung der Befestigungsschraube wirkenden mechanischen Toleranzen kompensiert werden.

Die Erfindung wird nachstehend anhand eines Ausführungsbeispiels unter Bezugnahme auf die beigefügten Figuren ausführlich beschrieben. Es zeigen:
- Figur 1: eine schematische Schnittdarstellung in eines Detailansicht eines mit einem Außengehäuse eines Füllstandsmessgerätes verbundenen Baugruppe als Ausführungsbeispiel der Erfindung,
- Figur 2: ein vergrößerter Ausschnitt der schematische Schnittdarstellung nach Figur 2, und
- Figur 3: eine schematische Schnittdarstellung einer Montagevorrichtung gemäß des Standes der Technik.

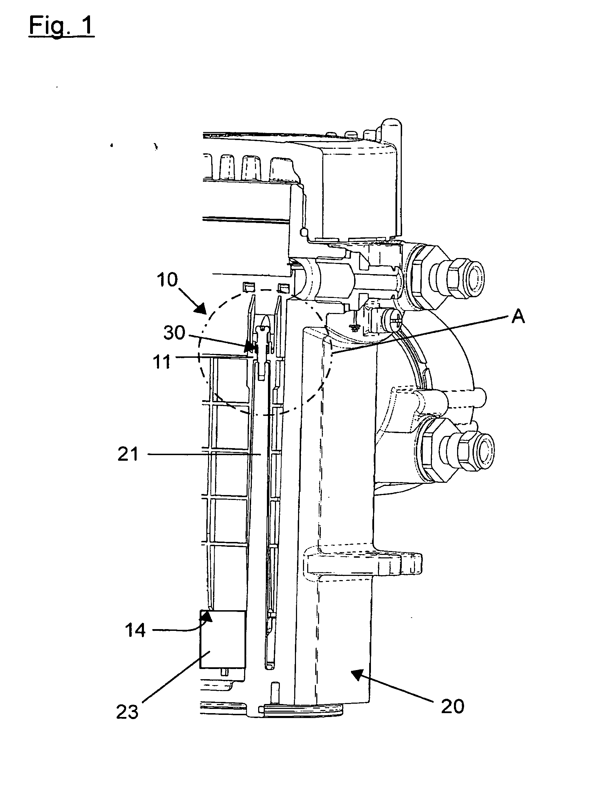

Nach Figur 1 wird eine Elektronikeinheit als Baugruppe 10 mittels wenigstens einer Befestigungsschraube 30 mit einem Außengehäuse 20 eines Füllstandsmessgerätes als weitere Baugruppe kraftschlüssig verbunden. Hierzu wird zur Montage die Baugruppe 10 derart an das Außengehäuse 20 herangeführt, dass sich die Baugruppe 10 mit einer Aufsetzkante 14 auf einem mit dem Außengehäuse 20 verbundenen Abstützelement 23 abstützt, so dass ein mit dem Außengehäuse 20 verbundener Befestigungsdom 21 sich im Bereich eines Schraubenträgers bzw. Befestigungsflansches 11 befindet, wie dies in der Detailansicht des in Figur 2 dargestellten Ausschnittes A erkennbar ist.

Wie aus Figur 2 zu erkennen ist, bleibt aufgrund der Abstützung der Baugruppe 10 an dem Abstützelement 23 zwischen der Stirnseite des Befestigungsdoms 21 und dem Schraubenträger 11 ein Spalt 50 bestehen, der durch Maßtoleranzen der beteiligten Teile, insbesondere der Maßtoleranzen des Abstützelementes 23 hinsichtlich dessen Abmessungen bedingt ist. In Abhängigkeit der Kombinationen der auftretenden Maßtoleranzen kann der Spalt 50 größer oder kleiner sein.

Der Befestigungsdom 21 weist stirnseitig ein Innengewinde 22 als Sackgewinde auf, das einem Gewinde 33 der Befestigungsschraube 30 entspricht. Der mit der Baugruppe 10 verbundene Schraubenträger bzw. ein Befestigungsflansch 11 ist mit einer Durchgangsöffnung 12 zur Aufnahme der Befestigungsschraube 30 versehen.

Die Befestigungsschraube 30 weist einen Schraubenkopf 31 auf und wird zusammen mit einer Schraubenfeder 40 als Federelement durch die Durchgangsöffnung 12 geführt und mittels des auf einem vorderen Schaftabschnitt 34 des Schraubenschaftes 32 angeordneten Gewindes 33 in den Befestigungsdom 21 eingeschraubt. Als Federelement 40 kann auch eine Tellerfeder verwendet werden.

An dem vorderen Schaftabschnitt 34 mit dem Gewinde 33 schließt sich schraubenkopfseitig ein weiterer Schaftabschnitt 35 mit einem im Vergleich zum Durchmesser des vorderen Schaftabschnittes 34 größeren Durchmesser an, so dass am Übergang dieser beiden Schaftabschnitte 34 und 35 eine umlaufende Schulter 37 entsteht, die auf der Stirnfläche des Befestigungsdoms 21 aufliegt, wenn die Befestigungsschraube 30 mit ihrem Gewinde 33 in das Innengewinde 22 des Befestigungsdoms 21 vollständig eingeschraubt ist, wie dies in Figur 1 dargestellt ist.

Der weitere Schaftabschnitt 35 wird schraubenkopfseitig von einem umlaufenden Kragen 36 begrenzt, so dass sich die Schraubenfeder 40 beim Einschrauben der Befestigungsschraube 30 in den Befestigungsdom 21 einerseits gegen diesen Kragen 36 und andererseits gegen den Befestigungsflansch 11 abstützt. Zwecks besserer Führung ist an die Durchgangsöffnung 12 eine Hülse 13 angeformt, die einen Innendurchmesser aufweist, so dass die auf den weiteren Schaftabschnitt 35 aufgezogene Schraubenfeder 40 in diese Hülse 13 eingeführt werden kann.

Zwischen dem weiteren Schaftabschnitt 35 und dem Schraubenkopf 31 befindet sich ein letzter Schaftabschnitt, dessen Durchmesser im Vergleich zu demjenigen des weiteren Schaftabschnittes 35 größer ist.

Anstelle dieses letzten Schaftabschnittes sowie des umlaufenden Kragens 36 kann der Schraubenkopf 31 als Anschlag für die Schraubenfeder 40 verwendet werden.

Beim Einschrauben der Befestigungsschraube 30 erzeugt die Schraubenfeder 40 eine zunehmende Vorspannung, die den Befestigungsflansch 11 in Richtung des Befestigungsdoms 21 und damit die Baugruppe 10 in gegen das Abstützelement 23 (Figur 1) drückt, ohne dass im vollständig eingeschraubten Zustand der Befestigungsflansch 11 direkt auf der Stirnfläche des Befestigungsdoms 21 aufliegt, sondern der Spalt 50 bestehen bleibt.

Damit kann die Baugruppe 10 in einem definierten Bereich entlang des Schraubenschaftes 32 gleiten, so dass durch diese sogenannte "schwimmende Lagerung" einerseits ein Toleranzausgleich der beteiligten Teile möglich ist und andererseits aufgrund der Federvorspannung der Schraubenfeder 40 eine sichere Befestigung der Baugruppe 10 über einen großen Temperaturbereich an dem Außengehäuse 20 der weiteren Baugruppe, hier bspw. des Füllstandsmessgerätes gewährleistet ist, da aufgrund der auf den Befestigungsflansch 11 wirkenden Federkraft die Baugruppe 10 auf das Abstützelement 23 gedrückt wird.

Die Befestigungsschraube 30 kann immer mit gleichem, definierten Drehmoment angezogen werden, da die Einschraubtiefe des Gewindes 33 in den Befestigungsdom 21 durch die Schulter 37 begrenzt wird.

Die Schraubenfeder 40 verhindert, dass der Befestigungsflansch 11 nicht überlastet wird, da dieser nur von der durch die Schraubenfeder 40 erzeugten Anpresskraft beaufschlagt wird.

### Bezugszeichenliste

- 1: Baugruppe
- 2: Außen- oder Umgehäuse
- 3: Befestigungsdom
- 4: Sackgewinde
- 5: Schraubenschaft der Befestigungsschraube 6
- 6: Befestigungsschraube
- 7: Bohrung
- 8: Schraubenträger
- 9: Schraubenkopf

- 10: Baugruppe
- 11: Schraubenträger, Befestigungsflansch
- 12: Durchgangsöffnung des Schraubenträgers 11
- 13: Buchse
- 14: Aufsetzkante

- 20: Außen- oder Umgehäuse
- 21: Gewindeträger, Befestigungsdom
- 22: Innengewinde, Sackgewinde des Gewindeträgers 21
- 23: Abstützelement

- 30: Befestigungsschraube
- 31: Schraubenkopf der Befestigungsschraube 30
- 32: Schraubenschaft der Befestigungsschraube 30
- 33: Gewinde der Befestigungsschraube 30
- 34: vorderen Schaftabschnitt der Befestigungsschraube 30
- 35: weiterer Schaftabschnitt der Befestigungsschraube 30
- 36: schraubenkopfseitigen Anschlag, umlaufender Kragen
- 37: umlaufenden Schulter

- 40: Federelement, Schraubenfeder

- 50: Spalt

## Patentansprüche

1. Baugruppe mit einem Bauteil (20), insbesondere einem Außengehäuse, an welchem eine weitere Baugruppe (10) befestigt ist, umfassend
- eine Befestigungsschraube (30) mit einem Schraubenkopf (31) und einem Schraubenschaft (32) mit Gewinde (33),
- ein mit der weiteren Baugruppe (10) verbundener Schraubenträger (11) zur Aufnahme des Schraubenschaftes (32) der Befestigungsschraube (30),
- ein mit dem Bauteil (20) verbundener Gewindeträger (21) mit einem dem Gewinde (33) der Befestigungsschraube (30) korrespondierenden Innengewinde (22), wobei in der Befestigungsposition mittels der Befestigungsschraube (30) eine kraftschlüssige Verbindung zwischen dem Schraubenträger (11) und dem Gewindeträger (21) hergestellt wird und die weitere Baugruppe (10) sich in der Befestigungsposition an einem Abstützelement (23) des Bauteils (20) abstützt, wobei
- der Schaft (32) der Befestigungsschraube (30) einen vorderen Schaftabschnitt (34) mit dem Gewinde (33) aufweist, wobei dieser vordere Schaftabschnitt (34) in der Befestigungsposition von dem Innengewinde (22) aufgenommen wird, und
- der Schaft (32) der Befestigungsschraube (30) einen an den vorderen Schaftabschnitt (34) sich schraubenkopfseitig anschließenden weiteren Schaftabschnitt (35) zur Aufnahme eines Federelementes (40) aufweist, wobei dieses Federelement (40) beim Eindrehen der Befestigungsschraube (30) in das Innengewinde (22) gegen den Schraubenträger (11) und einen schraubenkopfseitigen Anschlag (36) vorgespannt wird, so dass dabei die weitere Baugruppe (10) gegen das Abstützelement (23) gedrückt wird, wobei zwischen dem vorderen Schaftabschnitt (34) und dem Schraubenkopf (31) ein umlaufender Kragen (36) auf dem weiteren Schaftabschnitt (35) als schraubenkopfseitiger Anschlag vorgesehen ist, wobei der Schraubenträger als Befestigungsflansch (11) mit einer Durchgangsöffnung (12) zur Aufnahme des Schraubenschaftes (32) der Befestigungsschraube (30) ausgebildet ist,
**dadurch gekennzeichnet, dass**
in der Befestigungsposition des vollständig in den Gewindeträger (21) eingeschraubten vorderen Schaftabschnitts (34) ein Spalt (50) zwischen dem Gewindeträger (20) und dem Schraubenträger (11) verbleibt,und schraubenkopfseitig an der Durchgangsöffnung (12) des Befestigungsflansches (11) eine Buchse (13) an den Befestigungsflansch (11) angeformt ist, in der das Federelement (40) geführt wird, wobei zum Einführen des umlaufenden Kragens (36) des Schaftes (35) in die Buchse (13) der Durchmesser des Kragens (36) dem Innendurchmesser der Buchse (13) entspricht.

2. Baugruppe nach Anspruch 1,
**dadurch gekennzeichnet, dass**
zur Ausbildung einer den Schaft (32) der Befestigungsschraube (30) umlaufenden Schulter (37) der Durchmesser des weiteren Schaftabschnittes (35) größer als der Außendurchmesser des vorderen Schaftabschnittes (34) ist, wobei die Schulter (37) in der Befestigungsposition auf dem Gewindeträger (21) aufliegt.

3. Baugruppe nach einem der vorhergehenden Ansprüche,
**dadurch gekennzeichnet, dass**
der Gewindeträger als Befestigungsdom (21) mit einem Sackgewinde (22) als Innengewinde ausgebildet ist.

4. Baugruppe nach einem der vorhergehenden Ansprüche,
**dadurch gekennzeichnet, dass**
das Federelement als Druckfeder (40), insbesondere als Schraubenfeder oder Tellerfeder ausgebildet ist.

5. Baugruppe nach einem der vorhergehenden Ansprüche,
**dadurch gekennzeichnet, dass**
durch Einstellung der Länge des weiteren Schraubenschaftes (35) zwischen dem schraubenkopfseitigen Ende des vorderen Schaftabschnittes (34) und dem Anschlag (36) für das Federelement (40) der Spalt (50) derart bestimmt wird, dass die in axialer Richtung der Befestigungsschraube (30) wirkenden mechanischen Toleranzen kompensiert werden.

6. Baugruppe nach einem der Ansprüche 1 bis 5,
**dadurch gekennzeichnet, dass**
das Innengewinde (22) durch die Befestigungsschraube (30) gebildet ist, in dem diese selbstschneidend ausgebildet ist.

## Claims

1. An assembly with a component (20), in particular an external housing, to which a further assembly (10) is fastened, comprising
- a fastening screw (30) with a head (31) and a shank (32) with a thread (33),
- a screw carrier (11) connected to the further assembly (10) for receiving the shank (32) of the fastening screw (30),
- a threaded carrier (21) connected to the component (20) and having an internal thread (22) corresponding to the thread (33) of the fastening screw (30), wherein a connection with non-positive locking is formed between the screw carrier (11) and the threaded carrier (21) in the fastening position by means of the fastening screw (30), and the further assembly (10) is supported in the fastening position on a support element (23) of the component (20), wherein
- the shank (32) of the fastening screw (30) has a front shank portion (34) with the thread (33), wherein this front shank portion (34) is received in the fastening position by the internal thread (22), and
- the shank (32) of the fastening screw (30) has a further shank portion (35) attached to the front shank portion (34) on the screw head side for receiving a spring element (40), wherein this spring element (40) is pre-stressed against the screw carrier (11) and a stop (36) on the screw head side when the fastening screw (30) is screwed into the internal thread (22), so that the further assembly (10) is pressed against the support element (23) in this case, wherein between the front shank portion (34) and the screw head (31) a rotating collar (36) on the further shank portion (35) is provided as a stop on the screw head side, wherein the screw carrier is designed in the form of a fastening flange (11) with a through opening (12) for receiving the shank (32) of the fastening screw (30), **characterized in that** in the fastening position of the front shank portion (34) screwed completely into the threaded carrier (21) a gap (50) remains between the threaded carrier (20) and the screw carrier (11), and a bush (13), in which the spring element (40) is guided, is formed on the fastening flange (11) at the through opening (12) of the fastening flange (11) on the screw head side, wherein, in order to insert the rotating collar (36) of the shank (35) into the bush (13), the diameter of the collar (36) corresponds to the internal diameter of the bush (13).

2. An assembly according to claim 1, **characterized in that**, in order to form a shoulder (37) running around the shank (32) of the fastening screw (30), the diameter of the further shank portion (35) is greater than the external diameter of the front shank portion (34), wherein the shoulder (37) rests in the fastening position upon the threaded carrier (21).

3. An assembly according to one of the preceding claims, **characterized in that** the threaded carrier is designed in the form of a fastening dome (21) with a blind thread (22) as the internal thread.

4. An assembly according to any one of the preceding claims, **characterized in that** the spring element is designed in the form of a compression spring (40), in particular in the form of a helical spring or a cup spring.

5. An assembly according to any one of the preceding claims, **characterized in that** the gap (50) is determined by setting the length of the further screw shank (35) between the end of the front shank portion (34) on the screw head side and the stop (36) for the spring element (40), in such a way that the mechanical tolerances acting in the axial direction of the fastening screw (30) are compensated.

6. An assembly according to any one of claims 1 to 5, **characterized in that** the internal thread (22), in which the fastening screw (30) is made self-tapping, is formed by the latter.

## Revendications

1. Ensemble avec un composant (20), en particulier un boitier externe sur lequel est fixé un second ensemble (10) comprenant :
- une vis de fixation (30) équipée d'une tête (31) et d'une tige (32) munie d'un filetage (33),
- un support de vis (11) relié au second ensemble (10) pour permettre la réception de la tige (32) de la vis de fixation (30),
- un support fileté (21) relié au composant (20) comportant un filetage interne (22) correspondant au filetage (33) de la vis de fixation (30), dans la position de fixation, la vis de fixation (30) permettant d'obtenir une liaison par la force entre le support de vis (11) et le support fileté (21), et le second ensemble (10) s'appuyant dans la position de fixation contre un élément d'appui (23) de composant (20),
- la tige (32) de la vis de fixation (30) comporte un tronçon de tige avant (34) équipé du filetage (33), ce tronçon de tige avant (34) étant reçu par le filetage interne (22) dans la position de fixation, et
- la tige (32) de la vis de fixation (30) comporte un second tronçon de tige (35) se raccordant au tronçon de tige avant (34) du côté de la tête de vis pour recevoir un élément élastique (40), cet élément élastique (40) étant précontraint, lors du vissage de la vis de fixation (30) dans le filetage interne (22) contre le support de vis (11) et une butée (36) située du côté de la tête de vis de sorte que le second ensemble (10) soit ainsi comprimé contre l'élément d'appui (23), entre le tronçon de tige avant (34) et la tête de vis (40) étant prévue une collerette périphérique (36) formant butée du côté de la tête de vis, sur le second tronçon de tige (35), le support de vis étant réalisé sous la forme d'une bride de fixation (11) comportant une ouverture de passage (12) pour la réception de la tige (32) de la vis de fixation (30),
**caractérisé en ce que**
dans la position de fixation dans laquelle le tronçon de tige avant (34) est totalement vissé dans le support fileté (20) une fente (50) subsiste entre le support fileté (20) et le support de vis (30), et, du côté de la tête de vis, est formé sur la bride de fixation (11) sur l'ouverture de passage (12) de cette bride de fixation (11) un manchon (13) dans lequel est guidé l'élément élastique (40), pour permettre l'introduction de la collerette périphérique (36) de la tige (35) dans le manchon (13) le diamètre de la collerette (36) correspondant au diamètre interne du manchon (13).

2. Ensemble conforme à la revendication 1,
**caractérisé en ce que**
pour permettre de former un épaulement (37) entourant la tige (32) de la vis de fixation (30), le diamètre du second tronçon d'arbre (35) est supérieure au diamètre externe du tronçon de tige avant (34), l'épaulement (37) s'appliquant sur le support fileté (21) dans la position de fixation.

3. Ensemble conforme à l'une des revendications précédentes,
**caractérisé en ce que**
le support fileté est réalisé sous la forme d'un dôme de fixation (21) équipé d'un filetage sans issue (22) constituant le filetage interne.

4. Ensemble conforme à l'une des revendications précédentes,
**caractérisé en ce que**
l'élément élastique est réalisé sous la forme d'un ressort de pression (40) en particulier sous la forme d'un ressort hélicoïdal ou d'un ressort Belleville.

5. Ensemble conforme à l'une des revendications précédentes,
**caractérisé en ce que**
par réglage de la longueur du second tronçon de tige (35) entre l'extrémité située du côté de la tête de vis du tronçon de tige avant (34) et la butée (36) pour l'élément élastique (40) la fente (50) peut être réglée de sorte que les tolérances mécaniques agissant dans la direction axiale de la vis de fixation (30) soient compensées.

6. Ensemble conforme à l'une des revendications 1 à 5,
**caractérisé en ce que**
le filetage interne (22) est formé par la vis de fixation (30) dans laquelle celui-ci est réalisé de manière autotaraudeuse.
